# EUROPEAN PATENT APPLICATION

(11) **EP 3 495 628 A1**
(43) Date of publication of application: **12.06.2019**
(21) Application number: 18204836.3
(22) Date of filing: 07.11.2018
(51) Int. Cl.: F01D 25/02, F02C 7/22, B64D 37/34, F02M 27/08

(54) **DE-ICING SYSTEM AND METHOD**

(30) Priority: 05.12.2017 GB 201720247
(71) Applicant: Rolls-Royce plc, London SW1E 6AT (GB)
(72) Inventor: Sanders, Noel, Derby, Derbyshire DE24 8BJ (GB)
(74) Representative: Rolls-Royce plc

(57) **Abstract**

A system for minimising the formation of ice crystals in the fuel system pipework of a gas turbine engine. The system includes an ultrasonic transmitter located within a wall of a pipe in the fuel system through which fuel passes. The system also includes a controller that causes said ultrasonic transmitter to produce ultrasonic waves when the temperature of the fuel is sufficiently low for any water in the fuel to freeze, the ultrasonic waves being sufficient to break particles of ice contained in the fuel that passes through the pipe. A method of minimising the formation of ice crystals in the fuel system pipework of a gas turbine engine is also disclosed.

## Description

### Field of the Disclosure

The present disclosure concerns a de-icing system and method, more specifically a system for and method of preventing or at least minimising the formation of ice crystals in the fuel system pipework of a gas turbine engine, for example a civil aero gas turbine engine.

### Background of the Disclosure

Gas turbine engines are exposed to moisture and cold temperatures during use, especially at high altitudes but sometimes also before take-off. This can result in the formation of ice on or within certain parts of the engine.

Icing of the fuel system of a gas turbine engine can have a severe impact on the ability of an engine to operate, often manifesting itself as an inability for the engine to accelerate and potentially leading to engine flameout (i.e. the engine runs down when the flame in the combustion chamber is extinguished) and/or aircraft controllability issues.

A commonly used system for minimising the formation of ice is configured to release stored water as a jet or plume from an upstream component such as a fuel filter bowl. A fuel filter bowl is typically configured to move from its storage location as the flow of fuel through the fuel system increases. The fuel:oil heat exchange characteristic of the fuel system, especially one including a fuel:oil heat exchanger, is often such that the temperature of the fuel drops during the initial transient e.g. acceleration, this temperature drop can cause the water from the aforementioned jet or plume of water to freeze as it travels downstream and mixes with colder fuel in the fuel system. The presence of ice particles can interfere with the smooth functioning of fuel system components downstream and in some cases risk damage or at least accelerate wear of certain components. In extreme cases the presence of ice particles in aviation fuel can cause the engine to malfunction.

An increase in the flow of fuel during operation can trigger a sudden accumulation and release of ice within the fuel system in the form of a "snowball" of ice. Such snowballs can drag additional ice and slush off the walls of upstream pipework thereby exacerbating the above mentioned problems. The formation of snowballs is especially problematic when the fuel system includes internally convoluted low pressure feed pipework.

Civil aero gas turbine engines typically demonstrate compliance to operation in icing capability rather than carry systems that break up any ice particles that are contained in fuel in the fuel system. The system of the present disclosure actively prevents or at least minimises the formation of ice particles in fuel within the fuel system without requiring a substantial redesign of the fuel system and/or adding numerous components and/or adding significant weight to the gas turbine engine.

United States patent US 5029440 discloses an acoustical anti-icing system for removing ice from bleed air in a gas turbine engine. However there is no reference to such a system preventing or minimising the formation of ice particles in fuel within the fuel system of such an engine.

United States patent application US 2007/199881 A1 discloses a fuel filter with antifreeze device for preventing or delaying aggregation of waxy materials such as paraffin. The fuel filter includes a device for generating pressure waves within the casing of the filter that propagate through fuel contained in the interior of the filter.

United Kingdom patent application GB 1531492 A discloses a pollution control method that includes means to produce an ultrasonic whistle to assist fuel atomisation in the engine induction passage.

The present disclosure provides a system for and method of minimising the formation of ice crystals in the fuel system pipework of a gas turbine engine that overcomes the disadvantages of the known systems or methods for preventing or minimising the formation of ice particles in such pipework or at least provides a useful alternative to such systems or methods.

### Statement of the Disclosure

In a first aspect the present disclosure provides a system for minimising the formation of ice crystals in the fuel system pipework of a gas turbine engine, the system comprising:
(a) an ultrasonic transmitter located within a wall of a pipe in the fuel system through which fuel passes; and
(b) a controller that causes said ultrasonic transmitter to produce ultrasonic waves when the temperature of the fuel is sufficiently low for any water in the fuel to freeze, the ultrasonic waves being sufficient to break particles of ice contained in the fuel that passes through the pipe.

Optional features of the system of the present disclosure will now be set out. These are applicable singly or in any combination with any aspect of the invention.

In some embodiments the ultrasonic transmitter is located within or adjacent a filter bowl.

In some embodiments the controller uses at least one transducer that monitors engine power and fuel tank temperature to determine when the temperature of the fuel is sufficiently low for any water in the fuel to freeze.

In some embodiments the ultrasonic transmitter produces ultrasonic waves having a frequency from 20 to 400 kHz.

In some embodiments the ultrasonic transmitter produces ultrasonic waves having a frequency from 25 to 100 kHz.

In some embodiments a plurality of ultrasonic transmitters are located within a wall of a pipe in the fuel system through which fuel passes.

In some embodiments the ultrasonic transmitters produce ultrasonic waves having the same frequency.

In some embodiments the ultrasonic transmitters produce ultrasonic waves having two or more differing frequencies.

In some embodiments a first ultrasonic transmitter is located within the wall of a pipe and a second ultrasonic transmitter is located downstream within the pipe, and the first ultrasonic transmitter produces ultrasonic waves that have a frequency that is higher than those produced by the second ultrasonic transmitter.

In some embodiments a first ultrasonic transmitter is located within the wall of a pipe and a second ultrasonic transmitter is located downstream within the pipe, and the first ultrasonic transmitter produces ultrasonic waves that have a frequency that is lower than those produced by the second ultrasonic transmitter.

In some embodiments the controller causes said ultrasonic transmitter(s) to produce ultrasonic waves when the temperature of the fuel is sufficiently low for any water in the fuel to be 0 °C or lower.

In a second aspect the present disclosure provides a method of minimising the formation of ice crystals in the fuel system pipework of a gas turbine engine, the method comprising the steps of:
(a) providing at least one ultrasonic transmitter within a wall of a pipe of the fuel system of a gas turbine engine;
(b) producing ultrasonic waves when the temperature of the fuel is sufficiently low for any water in the fuel to freeze, the ultrasonic waves being sufficient to break particles of ice contained in the fuel that passes through the pipe.

Optional features of the method of the present disclosure will now be set out. These are applicable singly or in any combination with any aspect of the invention.

In some embodiments a plurality of ultrasonic transmitters are provided and produce ultrasonic waves having two or more differing frequencies.

In some embodiments the at least one ultrasonic transmitter produces ultrasonic waves having a frequency from 20 to 400 kHz.

In some embodiments the at least one ultrasonic transmitter produces ultrasonic waves having a frequency from 25 to 100 kHz.

In a third aspect the present disclosure provides a gas turbine engine that includes the system of the first aspect.

In some embodiments the gas turbine engine is a gas turbine aircraft engine, for example a turbofan engine.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Throughout this specification and in the claims that follow, unless the context requires otherwise, the word "comprise" or variations such as "comprises" and "comprising", will be understood to imply the inclusion of a stated integer or group of integers but not the exclusion of any other stated integer or group of integers.

### Description of the drawings

Certain aspects or embodiments of the present disclosure are described by way of example only, with reference to the accompanying drawings. In the drawings:
**Figure 1** is a sectional side view of a gas turbine engine;
**Figure 2** is a diagrammatic representation of the system of the present disclosure.

### Detailed description

The present disclosure concerns a system for minimising the formation of ice crystals in the fuel system pipework of a gas turbine engine.

As mentioned above, the presence of ice in the fuel system pipework of a gas turbine engine is highly undesirable, potentially interfering with the smooth functioning of fuel system components, risking damage to certain components or even causing the engine to malfunction.

The system of the present disclosure has been devised with the understanding that the potential freezing of liquid water as it is exposed to a sudden drop in surrounding fuel temperature during an engine transient can be mitigated by fitting at least one ultrasonic transmitter into the engine fuel system such that during engine acceleration, ultrasonic waves are created within the fuel system pipework within which the fuel and water mixture is present. With temperature alone will being sufficient for ice crystals to form within the fuel, the ultrasonic waves from one or more ultrasonic transmitters act to break up these crystals, or at least slow the growth in their formation. While it is desirable to break up any such ice crystals completely, even partially disrupting the formation of ice crystals or snowballs enables ice particles to pass safely through downstream hardware without causing blockages or any other undesirable consequences.

In general it is neither desirable nor necessary for the system of the present disclosure to be operated continually. It need only be activated when the formation of ice particles and the consequences of their formation are acute, more specifically when the temperature of the fuel is sufficiently low for any water in the fuel to freeze, for example when the temperature of the fuel is 0 °C or lower. This can be, for example, when the operation of the gas turbine engine is accelerated, for example on take-off or in preparation for landing. When the engine accelerates, local fuel system temperatures can drop, exacerbating icing difficulties. Furthermore, when the engine accelerates, the fuel flow rate through the fuel system pipework increases, which increases the risk that any ice that has built up upon the walls of the fuel system pipework will be stripped away and released into the fuel system.

In view of the above the Applicant has developed a system for minimising the formation of ice crystals in the fuel system pipework of a gas turbine engine comprising:
(a) an ultrasonic transmitter located within a wall of a pipe in the fuel system through which fuel passes; and
(b) a controller that causes said ultrasonic transmitter to produce ultrasonic waves when the temperature of the fuel is sufficiently low for any water in the fuel to freeze, the ultrasonic waves being sufficient to break particles of ice contained in the fuel that passes through the pipe.

The ultrasonic transmitter and the manner in which it is located within a wall of a pipe in the fuel system through which fuel passes can take many forms.

In some embodiments the ultrasonic transmitter is located within a pipe. The ultrasonic transmitter is desirably flush mounted in the pipe to minimise any disruption to the flow of fuel through the pipe. In some embodiments the ultrasonic transmitter is formed as an annular section within the pipe.

The ultrasonic transmitter is located to provide optimum performance and impact. In general the ultrasonic transmitter is usefully located within upstream pipework and/or where there is a risk that stagnant or low speed flow may occur, for example in or near a fuel filter bowl. However the optimal location will depend on the fuel system in which the system of the present disclosure is employed.

In some embodiments the ultrasonic transmitter is a piezoelectric transducer. In some embodiments the ultrasonic transmitter is a magnetostrictive transducer.

The ultrasonic transmitter produce ultrasonic waves that are sufficient in their intensity to break or disrupt particles of ice contained in the fuel that passes through the pipe. One skilled in the art would be able to select suitable ultrasonic transmitting equipment or design and/or develop same for a designated purpose. In general, the ultrasonic transmitter suitably produces ultrasonic waves having a frequency from 20 to 400 kHz to break or disrupt particles of ice. In some embodiments the ultrasonic transmitter suitably produces ultrasonic waves having a frequency from 20 to 300 kHz. In some embodiments the ultrasonic transmitter suitably produces ultrasonic waves having a frequency from 25 to 200 kHz. In some embodiments the ultrasonic transmitter suitably produces ultrasonic waves having a frequency from 25 to 100 kHz. One skilled in the art can determine suitable frequencies depending on the design of the fuel system, balancing the need for the frequency to effectively break or disrupt particles of ice whilst avoiding high or resonant frequencies that interfere with the operation of other components or could negatively affect the integrity a/d/or working life of fuel filters used in the fuel system.

The controller can take many forms. In some embodiments the controller uses at least one transducer that monitors engine power and fuel tank temperature to determine when the temperature of the fuel is sufficiently low for any water in the fuel to freeze. The system may include a computation means that predicts and/or calculates the maximum possible drop in fuel system temperature that may occur based on current engine operating conditions and ratings, only activating the system when a negative fuel system temperature is calculated as possible. In this way the system of the present disclosure can produce ultrasonic waves in anticipation of the temperature of the fuel being sufficiently low for any water in the fuel to freeze rather than only in response to the temperature of the fuel being sufficiently low for any water in the fuel to freeze.

In some instances it is desirable to monitor certain additional input parameters to the control system to further reduce the likelihood that the system is activated unnecessarily. For example, one such additional input parameter is throttle lever position, in which case the system remains deactivated, despite the potential for negative fuel temperatures, until throttle lever movement is detected that may trigger such an engine transient. Another additional input parameter that can be monitored is auto-throttle operation, in which account is made for typical engine behaviour under auto-throttle operation i.e. engine acceleration rate and/or likely engine power fluctuations. In auto-throttle operation control systems within the aircraft sense how the engines need to be operated to maintain the input course and speed of the aircraft, modulating engine power level to accomplish this. Hence, when operating in auto-throttle mode, the engines are likely to accelerate and decelerate, under the control of the aircraft control systems. These changes in power setting may increase the formation or release of ice.

The system of the present disclosure does not substantially disturb the majority of the fuel system and therefore can be readily retrofitted i.e. it increases icing tolerance without requiring any substantial redesigning of the fuel system.

In some embodiments a plurality of ultrasonic transmitters are located within a wall of a pipe in the fuel system through which fuel passes. In some embodiments the ultrasonic transmitters produce ultrasonic waves having the same frequency. In some embodiments the ultrasonic transmitters produce ultrasonic waves having two or more differing frequencies.

In some embodiments a first ultrasonic transmitter is located within the wall of a pipe and a second ultrasonic transmitter is located downstream within the pipe, and the first ultrasonic transmitter produces ultrasonic waves that have a frequency that is higher than those produced by the second ultrasonic transmitter. Such an arrangement can usefully disrupt larger ice particles when passing over or near the first ultrasonic transmitter and usefully disrupt any smaller ice particles when subsequently passing over or near the second ultrasonic transmitter.

In some embodiments a first ultrasonic transmitter is located within the wall of a pipe and a second ultrasonic transmitter is located downstream within the pipe, and the first ultrasonic transmitter produces ultrasonic waves that have a frequency that is lower than those produced by the second ultrasonic transmitter. Such an arrangement can usefully disrupt ice particles when passing over or near the first ultrasonic transmitter and usefully disrupt any disruption-resistant ice particles when subsequently passing over or near the second ultrasonic transmitter.

Additional ultrasonic transmitters can be usefully provided, usefully located and usefully spaced to optimise the breaking or disrupting of particles of ice contained in the fuel that passes through the pipework of the fuel system concerned.

The present disclosure also concerns a method of minimising the formation of ice crystals in the fuel system pipework of a gas turbine engine.

The first step, step (a), of the method of the present disclosure involves providing at least one ultrasonic transmitter within a wall of a pipe of the fuel system of a gas turbine engine;

The second step, step (b), of the method of the present disclosure involves producing ultrasonic waves when the temperature of the fuel is sufficiently low for any water in the fuel to freeze, the ultrasonic waves being sufficient to break or disrupt particles of ice contained in the fuel that passes through the pipe. In some embodiments such ultrasonic waves are produced when the temperature of the fuel is sufficiently low for any water in the fuel to be 0 °C or lower.

As described above with respect to the system of the present disclosure, in general, the ultrasonic transmitter suitably produces ultrasonic waves having a frequency from 20 to 400 kHz to break or disrupt particles of ice. In some embodiments the ultrasonic transmitter suitably produces ultrasonic waves having a frequency from 20 to 300 kHz. In some embodiments the ultrasonic transmitter suitably produces ultrasonic waves having a frequency from 25 to 200 kHz. In some embodiments the ultrasonic transmitter suitably produces ultrasonic waves having a frequency from 25 to 100 kHz. One skilled in the art can determine suitable frequencies depending on the design of the fuel system, balancing the need for the frequency to effectively break or disrupt particles of ice whilst avoiding high or resonant frequencies that interfere with the operation of other components or could negatively affect the integrity a/d/or working life of fuel filters used in the fuel system.

As described above with respect to the system of the present disclosure, in some embodiments a plurality of ultrasonic transmitters are provided and produce ultrasonic waves having two or more differing frequencies.

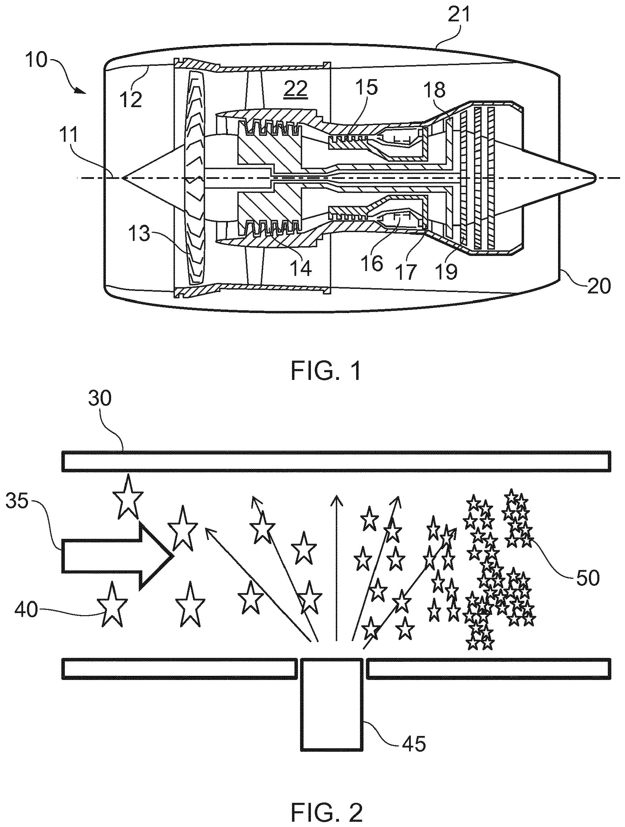

Certain embodiments will now be described by way of example only:
With reference to **Figure** 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20. The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

**Figure 2** is a diagrammatic representation of the system of the present disclosure. In the Figure there is depicted a pipe 30 that forms part of a fuel system of a gas turbine engine. An arrow 35 indicates the direction of travel of fuel through the pipe 30. The fuel contains ice large particles 40 that pass over or adjacent an ultrasonic transmitter 45 located within a wall of the pipe 30 as the fuel passes through the pipe. The ultrasonic transmitter 45 produces ultrasonic waves triggered by a controller (not shown) when the temperature of the fuel is sufficiently low for any water in the fuel to freeze. The ultrasonic waves are of an intensity that is sufficient to break the large particles 40 into smaller particles 50 thereby disrupting the formation of ice particles or snowballs that can interfere with the smooth functioning of fuel system components downstream, risk damage or at least accelerate wear of certain components, or even cause the engine to malfunction.

It will be understood that the disclosure is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A system for minimising the formation of ice crystals in the fuel system pipework of a gas turbine engine, the system comprising:
(a) an ultrasonic transmitter located within a wall of a pipe in the fuel system through which fuel passes; and
(b) a controller that causes said ultrasonic transmitter to produce ultrasonic waves when the temperature of the fuel is sufficiently low for any water in the fuel to freeze, the ultrasonic waves being sufficient to break particles of ice contained in the fuel that passes through the pipe.

2. The system of claim 1 wherein the ultrasonic transmitter is located within or adjacent a filter bowl.

3. The system of claim 1 or 2 wherein the controller uses at least one transducer that monitors engine power and fuel tank temperature to determine when the temperature of the fuel is sufficiently low for any water in the fuel to freeze.

4. The system of any preceding claim wherein the ultrasonic transmitter produces ultrasonic waves having a frequency from 20 to 400 kHz.

5. The system of claim 4 wherein the ultrasonic transmitter produces ultrasonic waves having a frequency from 25 to 100 kHz.

6. The system of any preceding claim wherein a plurality of ultrasonic transmitters are located within a wall of a pipe in the fuel system through which fuel passes.

7. The system of claim 6 wherein the ultrasonic transmitters produce ultrasonic waves having the same frequency.

8. The system of claim 6 wherein the ultrasonic transmitters produce ultrasonic waves having two or more differing frequencies.

9. The system of claim 8 wherein a first ultrasonic transmitter is located within the wall of a pipe and a second ultrasonic transmitter is located downstream within the wall of the pipe, and the first ultrasonic transmitter produces ultrasonic waves that have a frequency that is higher than those produced by the second ultrasonic transmitter.

10. The system of claim 8 wherein a first ultrasonic transmitter is located within the wall of a pipe and a second ultrasonic transmitter is located downstream within the wall of the pipe, and the first ultrasonic transmitter produces ultrasonic waves that have a frequency that is lower than those produced by the second ultrasonic transmitter.

11. A method of minimising the formation of ice crystals in the fuel system pipework of a gas turbine engine, the method comprising the steps of:
(a) providing at least one ultrasonic transmitter within a wall of a pipe of the fuel system of a gas turbine engine;
(b) producing ultrasonic waves when the temperature of the fuel is sufficiently low for any water in the fuel to freeze, the ultrasonic waves being sufficient to break particles of ice contained in the fuel that passes through the pipe.

12. The method of claim 11 wherein a plurality of ultrasonic transmitters are provided and produce ultrasonic waves having two or more differing frequencies.

13. The method of claim 11 or 12 wherein the at least one ultrasonic transmitter produces ultrasonic waves having a frequency from 20 to 400 kHz.

14. The method of claim 13 wherein the at least one ultrasonic transmitter produces ultrasonic waves having a frequency from 25 to 100 kHz.

15. A gas turbine engine that includes the system of any one of claims 1 to 10.
